# EUROPEAN PATENT SPECIFICATION

(11) **EP 4 453 499 B1**
(45) Date of publication and mention of the grant of the patent: **03.12.2025**
(21) Application number: 22798376.4
(22) Date of filing: 07.10.2022
(51) Int. Cl.: F41A 33/00, F41G 3/26, G09B 9/00, F41J 11/00

(54) **TRAINING SYSTEM**
TRAININGSSYSTEM
SYSTÈME D'ENTRAÎNEMENT

(30) Priority: 23.12.2021 IT 202100032489
(43) Date of publication of application: 30.10.2024
(73) Proprietor: Fabbrica d'Armi Pietro Beretta S.p.A., 25063 Gardone Val Trompia (Brescia) (IT)
(72) Inventor: BASSOLI, Marco, 25063 Gardone Val Trompia (Brescia) (IT); ZILIANI, Giacomo, 25063 Gardone Val Trompia (Brescia) (IT); BONETTI, Giulio, 25063 Gardone Val Trompia (Brescia) (IT)
(74) Representative: Gamba, Alessandro
(86) International application number: PCT/IB2022/059593
(87) International publication number: WO 2023/118987

(56) References cited:
- US-A1- 2019 213 901
- US-B1- 11 132 915

## Description

The present invention relates to a training system for using a firearm. Furthermore, the present invention relates to a training method using said system.

In particular, but not in a limiting manner, the present invention pertains to the defense sector.

It is clearly of importance to be as trained as possible in the use of a firearm. In fact, the use of a firearm contextualizes a situation of potential danger both for those who use it and for those who are in proximity to the user. More training corresponds to more limited and contained potential danger. It is only practice and constant training that confers to the user of the firearm the experience necessary in order to exploit it effectively and to use it safely.

It is therefore known in the prior art to find solutions to train, or coach, people and/or law enforcement agencies and/or the military in the use of firearms. Examples of known training systems are known in documents US2019213901A1 and US11132915B1.

The more training, or coaching, takes place, under conditions that are similar to actual conditions, the greater the preparation and benefit derived by the user and those around them, limiting as much as possible a potentially hazardous situation.

In the prior art, training sessions are given by instructors who monitor the performance of users/students, detecting and verifying any situations to be improved.

At the same time, with known training systems, in addition to the feedback of the instructor, during a training session the user experiences personal feelings and has feedback when it hits, or misses, a target.

Such training systems, therefore, present a multiplicity of problems.

First of all, the attention of the instructor must always be maximum and must always be directed at the user. It is therefore not uncommon for an instructor to miss certain events and not be able to give complete feedback. This problem is also exacerbated in group training sessions and/or training sessions that take place in training regions with extensive metrics.

Secondly, the user experiences sensations that remain only in their head and that are difficultly transmissible and/or are used as a common factor.

The need to provide a training system that solves these problems is therefore strongly felt turning out to be extremely useful and versatile for both users and instructors.

The object of the present invention is to provide a training system that solves said need.

Such object is achieved by means of the training system claimed in claim 1. Similarly, such object is achieved by means of a training method according to claim 14. The claims dependent thereon describe preferred variant embodiments involving further advantageous aspects.

Further features and advantages of the invention will become clear from the description given below of its preferred embodiments as non-limiting examples, in reference to the attached figures, wherein:

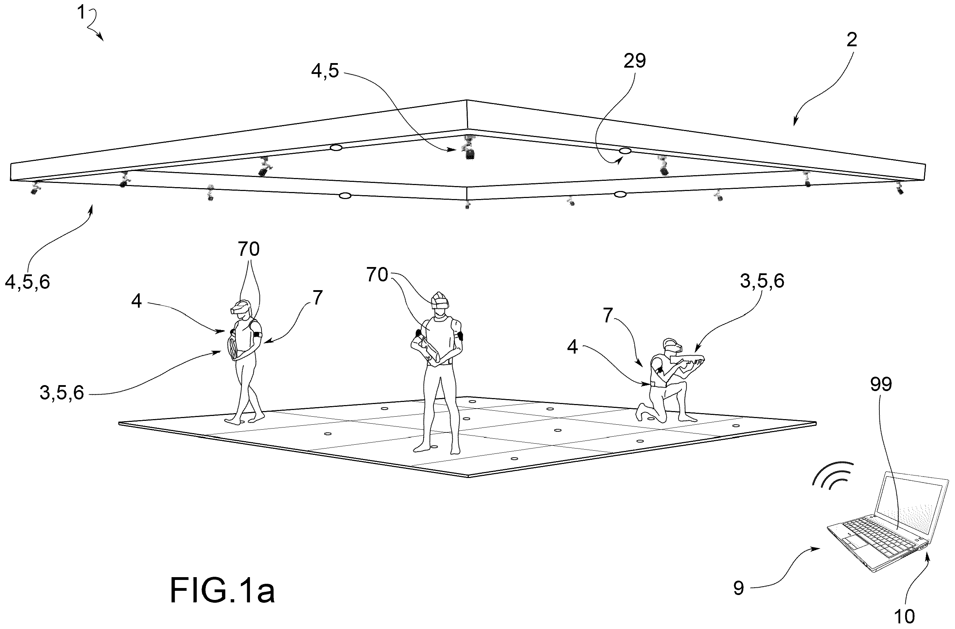

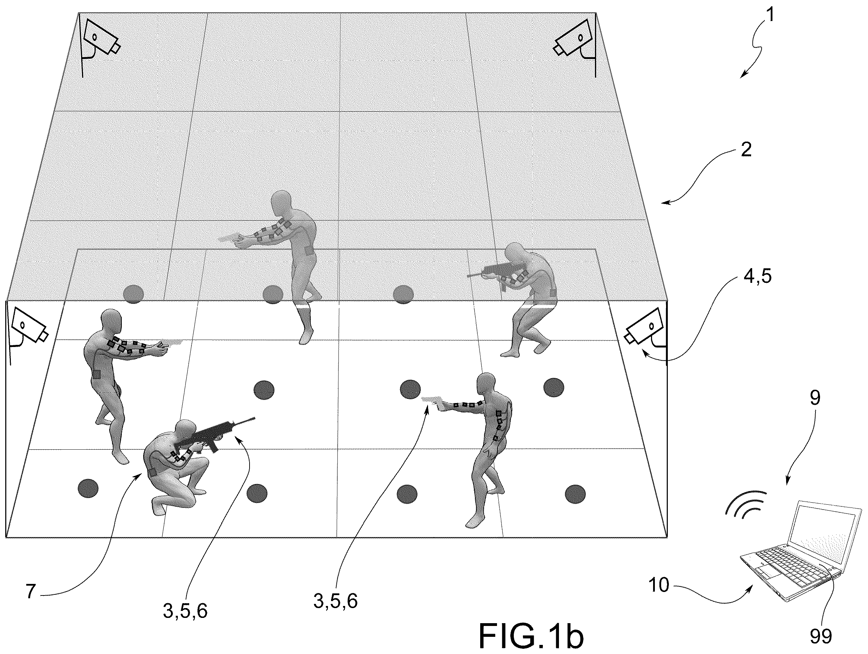

- Figures 1a and 1b show two schematic views relating to training systems according to the present invention;

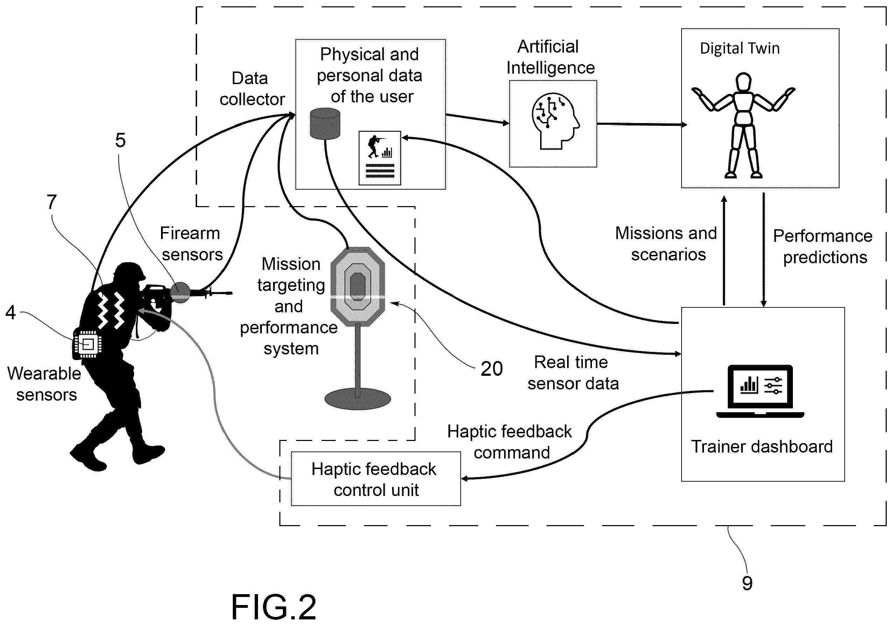

- Figure 2 shows a schematic diagram of the operating logic of the training system according to a preferred embodiment;

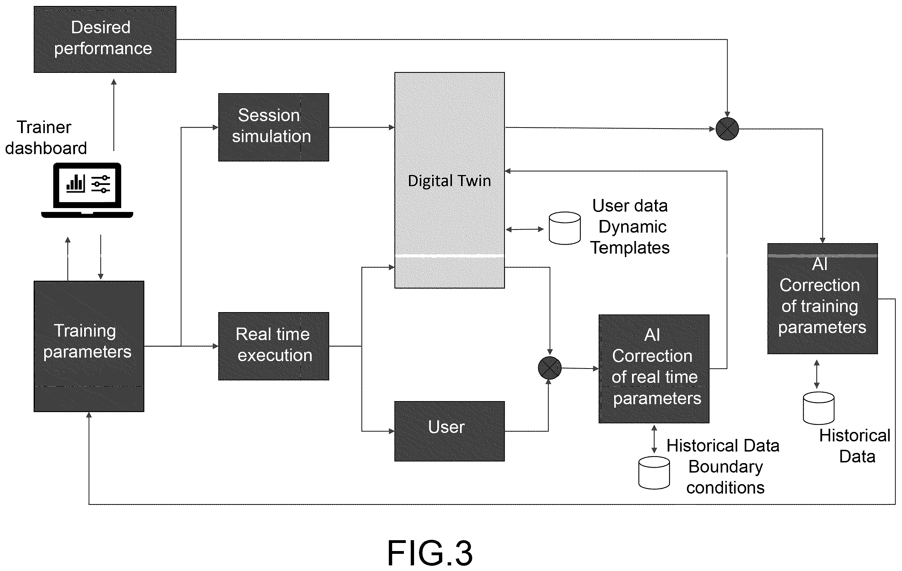

- Figure 3 shows a schematic diagram of the operating logic of the training system according to a preferred embodiment.

With reference to the accompanying figures, with the reference number 1 is indicated a training system 1 for using a firearm according to this invention.

The training system 1 comprises a training region 2, in which training sessions are performable.

The training region 2 is such that the user is free to perform movements, displacements, and similar.

The training region 2 comprises fixed or movable targets 20.

Furthermore, the training region 2 comprises training region status sensors 29 that are suitable for detecting region environmental conditions, e.g., temperature, humidity, wind, and similar.

According to a preferred embodiment, the training region 2 is an actual outdoor area habitable by one or more users.

According to a preferred embodiment, the training region 2 is an area virtualized by a user. Preferably, in such a preferred embodiment, the targets are virtualized.

In addition, the training system 1 comprises a firearm 3, which is wieldable by the user.

By means of such a firearm 3, the user has to hit the targets 20 provided in the training region 2.

According to a preferred embodiment, the firearm 3 is a real firearm.

According to a further preferred embodiment, the firearm 3 is a simulacrum firearm.

Depending on the type of training region 2, the type of firearm 3 to be used also varies.

According to the present invention, the training system 1 comprises user detection means 4 suitable for detecting user physical status data during a training session.

According to a preferred embodiment, the user detection means 4 comprise a cardiac status detection group, preferably suitable for detecting the user's heartbeat and/or electrocardiogram.

According to a preferred embodiment, the user detection means 4 comprise a sweat detection group, preferably suitable for detecting the galvanic response of the user's skin (GSR).

According to a preferred embodiment, the user detection means 4 comprise a respiratory status detection group, preferably suitable for detecting the respiratory rate.

According to a preferred embodiment, the user detection means 4 comprise a limb status detection group, preferably suitable for performing a myography of the limbs and of the main muscles of the limbs.

According to a preferred embodiment, the user detection means 4 comprise a position detection group, preferably suitable for detecting the user's position in the training region 2.

According to a preferred embodiment, the user detection means 4 comprise a user activity detection group, preferably suitable for detecting the user's speed and/or acceleration and/or angular speed in the training region 2.

According to a preferred embodiment, the user detection means 4 are positioned on the user, e.g., worn by the user.

According to a preferred embodiment, the user detection means 4 are positioned remotely with respect to the user, e.g., positioned in the training region 2.

According to a preferred embodiment, the user detection means 4 are positioned both on the user and in the training region 2.

According to the invention, the training system 1 comprises firearm detection means 5 suitable for detecting firearm status data.

According to a preferred embodiment, the training system 1 the firearm detection means 5 comprise a firearm status detection group, preferably suitable for detecting the operational status of the firearm, for example the presence thereof in the holster, or the aiming thereof.

According to a preferred embodiment, the training system 1 the firearm detection means 5 comprise a firearm configuration detection group, preferably suitable for detecting the safe configuration thereof, or the configuration thereof in semi-automatic or automatic mode, or the armed configuration thereof.

According to a preferred embodiment, the training system 1 the firearm detection means 5 comprise a firearm grip detection group, preferably suitable for detecting the modes in which the firearm is gripped by the user.

According to a preferred embodiment, the training system 1 the firearm detection means 5 comprise a trigger guard engagement detection group, preferably suitable for detecting the presence of the user's finger in the firearm's trigger guard.

According to a preferred embodiment, the training system 1 the firearm detection means 5 comprise a shooting and shooting mode detection group, preferably suitable for detecting the shooting of the firearm and/or the modes, e.g., the actuation on the trigger performed by the user.

According to a preferred embodiment, the training system 1 the firearm detection means 5 comprise a firearm activity detection group, preferably suitable for detecting speed and/or acceleration and/or angular speed of the firearm 3 in the training region 2.

According to a preferred embodiment, the firearm detection means 5 are positioned on the firearm.

According to a preferred embodiment, the firearm detection means 5 are positioned remotely in respect to the firearm, for example positioned in the training region 2.

According to a preferred embodiment, the firearm detection means 5 are positioned both on the firearm and in the training region 2.

According to the present invention, the training system 1 comprises target detection means 6 suitable for detecting target data.

According to a preferred embodiment, the target detection means 6 are suitable for detecting whether and how a shot performed with the firearm 3 hit the target 20.

According to a preferred embodiment, the target detection means 6 are positioned on the user.

According to a preferred embodiment, the target detection means 6 are positioned on the firearm.

According to a preferred embodiment, the target detection means 6 are positioned in the training region 2 positioned on the target 20.

According to a preferred embodiment, the target detection means 6 are positioned on the user, on the firearm, and in the training region.

According to a preferred embodiment, the training system 1 comprises devices wearable by the user 7, comprising haptic devices 70 suitable for producing haptic signals on the user.

Preferably, said haptic devices 70 are suitable for simulating, for example by means of an electrical signal or a vibratory signal, the recoil and/or noise of a shot. Preferably, such a solution is usable for simulating determined behaviors typical of a real firearm in a situation wherein a simulacrum firearm is used.

According to the present invention, the training system 1 comprises a data management and analysis unit 9.

The data management and analysis unit 9 is operatively connected to the user detection means 4, to the firearm detection means 5 and to the target detection means 6 and is therefore suitable for receiving the user physical status data, the firearm status data and the target data. That is to say, the data management and analysis unit 9 receives all data detected by the user detection means 4 and therefore receives all information relating to the physical state of the user, for example, heart status, speed, etc. That is to say that the data management and analysis unit 9 receives all of the data detected by the firearm detection means 5 and therefore receives all of the information relating to the status of the firearm, for example the grip, inclination, etc. That is to say that the data management and analysis unit 9 receives all of the data detected by the target detection means 6 and therefore receives all of the information relating to the targets, for example target hit, target missed, etc.

According to a preferred embodiment, the data management and analysis unit 9 is operatively connected to the user detection means 4 by means of physical connections and/or wiring.

According to a preferred embodiment, the data management and analysis unit 9 is operatively connected to the user detection means 4 by means of wireless connections.

According to a preferred embodiment, the data management and analysis unit 9 is operatively connected to the firearm detection means 5 by means of physical connections and/or wiring.

According to a preferred embodiment, the data management and analysis unit 9 is operatively connected to the firearm detection means 5 by means of wireless connections.

According to a preferred embodiment, the data management and analysis unit 9 is operatively connected to the target detection means 6 by means of physical connections and/or wiring.

According to a preferred embodiment, the data management and analysis unit 9 is operatively connected to the target detection means 6 by means of wireless connections.

According to a preferred embodiment, the data management and analysis unit 9 comprises a memory 99 in which all of the data are storable.

According to the invention, the data management and analysis unit 9 is configured to create a virtual training model as a function of set/stored user features, for example coming from theoretical models resulting from scientific studies, as a function of set/stored environmental features, as a function of set/stored training session features, and as a function of the expected results, for comparing the user physical status data, firearm status data and target data with the virtual training model.

In other words, the data management and analysis unit 9 creates a virtual training model starting from of the data received. The virtual training model presents all the information relating to the user, the firearm and the training region.

According to the present invention, the virtual training model is compared with the detected data: as a function of said received data and said comparison between the model and the received data, the result of the training session is determined and any eventual points to be improved in order to improve the results are identified.

For example, it is determined whether the physical status of the user should or should not be improved.

For example, it is determined whether the use of the firearm should or should not be improved.

For example, it is determined whether the aim should or should not be improved.

In this way, any eventual user deficiencies are highlighted and specific ad hoc training sessions may be provided, aimed at improving such determined deficiencies.

According to a preferred embodiment, the data management and analysis unit 9 for each training session collects the user physical status data, the firearm status data and the target data, and collects the data in a memory.

Preferably, the data management and analysis unit 9 updates the set/stored user features, the set/stored environmental features, and the set/stored training session features and updates the virtual training model in order to compare new user physical status data, firearm status data and target data collected with the updated virtual training model.

According to a preferred embodiment, the data management and analysis unit 9 updates the virtual training model between one training session and another.

According to a preferred embodiment, the data management and analysis unit 9 updates the virtual training model during a training session.

According to a preferred embodiment, the data management and analysis unit 9 sets a training session in function of the initial physical user status data.

For example, the data management and analysis unit 9 sets a training session for a young user with certain targets, while sets a training session for an older user with different targets.

According to a preferred embodiment, the data management and analysis unit 9 sets a training session based on the expected results.

For example, the data management and analysis unit 9 sets a training session with a multiplicity of targets with the aim of improving the results of a user.

According to a preferred embodiment, the data management and analysis unit 9 is for example a computer, a tablet, a smartphone, or a workstation.

According to a preferred embodiment, the data management and analysis unit 9 is connectable to a further external electronic device, for example a computer, a tablet, a smartphone, wherein, through said external device 10, the data in the data management and analysis unit 9 is accessible, modifiable and integrable, for modifying the virtual training model.

According to a further preferred embodiment, the data management and analysis unit 9 is the external electronic device 10 itself.

According to a preferred embodiment, the firearm 3 is a simulacrum firearm, wherein the training system 1 comprises devices wearable by the user 7, comprising haptic devices 70 suitable for producing haptic signals on the user 70, wherein said device wearable by the user 7 is operatively connected to the data management and analysis unit 9, wherein the data management and analysis unit 9 controls the actuation of the haptic devices 70.

That is to say, the training system 1 simulates a situation as real as possible in function of what is required.

According to a preferred embodiment, the training region 2 comprises training region status sensors 29 suitable for detecting region environmental conditions, e.g., temperature, humidity, wind, and similar.

Preferably, the data management and analysis unit 9 updates the virtual training model as a function of what is detected by the training region status sensors 29.

As mentioned, it is an object of the present invention also a training method for using a firearm by means of a training system 1 having the characteristics described above.

According to the present invention, the method comprises the steps of:
- detecting the user physical status data, firearm status data and target data;
- creating a virtual training model as a function of set/stored user features, e.g., coming from theoretical models resulting from scientific studies, as a function of set/stored environmental features, as a function of set/stored training session features and as a function of the expected results;
- comparing the user physical status data, the firearm status data and the target data with the virtual training model.

Furthermore, according to a preferred embodiment, the training method further comprises the step of:
- collecting the user physical status data, the firearm status data and the target data;
- updating the set/stored user features, the set/stored environmental features, and the set/stored training session features;
- updating the virtual training model to compare new collected user physical status data, firearm status data and target data with the updated virtual training model.

According to a preferred embodiment, the step of updating the virtual training model is performed between one training session and the other.

According to a preferred embodiment, the step of updating the virtual training model is performed during a training session, in real time.

Innovatively, the training system and the training method largely fulfill the purpose of the present invention in overcoming the problems that are typical of the prior art.

Advantageously, in fact, the training system and the training method are suitable for performing effective training for users, as well as for giving clear support to the activity of instructors.

Advantageously, both the user and the instructor obtain complete data regarding a training session. Advantageously, the user, but also the same instructor, both obtain a complete comparison with the virtual training model.

Advantageously, the strengths and weaknesses of the user are highlighted during an entire training session.

Advantageously, the training system has also predictive character, predicting the results that are expected from a user compared to a desired training situation, for example simulating a certain type of mission.

Advantageously, the training system has also certifying character: a training session is classifiable as "passed"/"not passed" in function of the results achieved by the user with respect to the expected results.

Advantageously, the virtual training model is suitable for predicting a series of user/firearm/training region situations.

Advantageously, the training system recognizes and manages different situations.

Advantageously, the training system is settable in function of the features, such as the age or experience, of the user.

Advantageously, the training system is settable in function of the features, such as the type or caliber, of the firearm.

Advantageously, the training system is settable in function of the features, such as the temperature or wind, of the training region.

Advantageously, the training region may be small in size and may also be performed indoors.

Advantageously, the training is virtualizable.

Advantageously, the training is performable in groups, presenting real people in the same training region or presenting within a virtual reality people using, remotely, different training systems.

It is clear that a person skilled in the art, in order to satisfy contingent needs, could make modifications to the training system described above, all being contained within the scope of protection as defined in the following claims.

## Claims

1. A training system (1) for using a firearm, comprising:
- a training region (2), in which training sessions are executable, wherein the training region (2) comprises fixed or movable targets (20);
- a firearm (3);
- user detection means (4) suitable for detecting user physical status data;
- firearm detection means (5) suitable for detecting firearm status data;
- target detection means (6) suitable for detecting target data;
- a data management and analysis unit (9), operatively connected to the user detection means (4), to the firearm detection means (5) and to the target detection means (6), suitable for receiving the user physical status data, the firearm status data and the target data, wherein the data management and analysis unit (9) is configured to create a virtual training model, as a function of set/stored user features, for example coming from theoretical models resulting from scientific studies, as a function of set/stored environmental features, as a function of set/stored training session features, and as a function of the expected results, to compare the user physical status data, the firearm status data and the target data with the virtual training model.

2. Training system (1) according to claim 1, wherein the data management and analysis unit (9) comprises a memory (99) and for each training session, it collects, in the memory (99), the user physical status data, the firearm status data and the target data, and updates the set/stored user features, the set/stored environmental features, the set/stored training session features and it updates the virtual training model for comparing collected new user physical status data, new firearm status data and new target data with the updated virtual training model.

3. Training system (1) according to claim 2, wherein the data management and analysis unit (9) updates the virtual training model between one training session and the other, and/or it updates the virtual training model during a training session in real time.

4. Training system (1) according to any one of the preceding claims, wherein the data management and analysis unit (9) sets a training session as a function of the initial user physical status data and/or as a function of the expected results.

5. Training system (1) according to any one of the preceding claims, wherein the data management and analysis unit (9) is connected to an external electronic device (10), for example a computer, a tablet, a smartphone, wherein, through said external device (10), the data in the data management and analysis unit (9) is accessible, modifiable and integrable, for modifying the virtual training model.

6. Training system (1) according to any one of the preceding claims, wherein the firearm (3) is a simulacrum firearm, wherein the training system (1) comprises devices wearable by the user (7) comprising haptic devices (70) suitable for producing haptic signals on the user (70), wherein said device wearable by the user (7) is operatively connected to the data management and analysis unit (9), wherein the data management and analysis unit (9) controls the actuation of the haptic devices (70).

7. Training system (1) according to any one of the preceding claims, wherein the user detection means (4) comprise:
- a cardiac status detection group, preferably suitable for detecting the user's heartbeat and/or electrocardiogram; and
- a respiratory status detection group, preferably suitable for detecting the respiratory rate; and
- a sweat detection group, preferably suitable for detecting the galvanic response of the skin (GSR); and
- a limb status detection group, preferably suitable for performing a myography of the limbs and main muscles of the limbs; and
- a position detection group, preferably suitable for detecting the user's position in the training region (2); and
- a user activity detection group, preferably suitable for detecting the user's speed and/or acceleration and/or angular speed in the training region (2).

8. Training system (1) according to claim 7, wherein the user detection means (4) are positioned on the user, for example worn by the user, and/or are remote with respect to the user, for example positioned in the training region (2).

9. Training system (1) according to any one of the preceding claims, wherein firearm detection means (5) comprise:
- a firearm status detection group, preferably suitable for detecting the operating status of the firearm, for example, the presence thereof in the holster, or the pointing thereof;
- a firearm configuration detection group, preferably suitable for detecting the safe configuration thereof, or the configuration thereof in semi-automatic or automatic mode, or the armed configuration thereof; and
- a firearm grip detection group, preferably suitable for detecting the modes in which the firearm is gripped by the user;
- a trigger guard engagement detection group, preferably suitable for detecting the presence of the user's finger in the firearm's trigger guard;
- a shooting and shooting mode detection group, preferably suitable for detecting the shooting of the firearm and/or the modes, e.g., the actuation on the trigger performed by the user;
- a firearm activity detection group, preferably suitable for detecting speed and/or acceleration and/or angular speed of the firearm (3) in the training region (2).

10. Training system (1) according to claim 9, wherein the firearm detection means (5) are positioned on the firearm and/or are remote with respect to the firearm, for example positioned in the training region (2).

11. Training system (1) according to any one of the preceding claims, wherein the target detection means (6) are suitable for detecting whether and how a shot performed with the firearm (3) hit the target (20).

12. Training system (1) according to claim 11, wherein the target detection means (6) are positioned on the user and/or on the firearm, and/or they are remote with respect to the firearm, for example positioned in the training region (2), and/or positioned on the targets (20).

13. Training system (1) according to any one of the preceding claims, wherein the training region (2) comprises training region status sensors (29) suitable for detecting region environmental conditions, e.g., temperature, humidity, wind, and similar, wherein the data management and analysis unit (9) updates the virtual training model as a function of what is detected by the training region status sensors (29).

14. A training method for using a firearm by means of training system (1) according to any one of the preceding claims, wherein the method comprises the steps of:
- detecting the user physical status data, firearm status data and target data;
- creating a virtual training model as a function of set/stored user features, for example coming from theoretical models resulting from scientific studies, as a function of set/stored environmental features, as a function of set/stored training session features and as a function of the expected results;
- comparing the user physical status data, the firearm status data and the target data with the virtual training model.

15. Training method according to claim 14, further comprising the steps of
- collecting the user physical status data, the firearm status data and the target data;
- updating the set/stored user features, the set/stored environmental features, the set/stored training session features;
- updating the virtual training model to compare new collected user physical status data, firearm status data and target data with the updated virtual training model.

16. Training method according to claim 15, wherein said step of updating the virtual training model is performed between one training session and the other, and/or during a training session in real time.

## Patentansprüche

1. Trainingssystem (1) zur Verwendung einer Schusswaffe, umfassend:
- einen Trainingsbereich (2), in dem Trainingssektionen ausführbar sind, wobei der Trainingsbereich (2) feste oder bewegliche Ziele (20) umfasst;
- eine Schusswaffe (3);
- Benutzererkennungsmittel (4), die geeignet sind, physische Benutzerzustandsdaten zu erkennen;
- Schusswaffenerkennungsmittel (5), die geeignet sind, Schusswaffenzustandsdaten zu erkennen;
- Zielerkennungsmittel (6), die geeignet sind, Zieldaten zu erkennen;
- eine Datenverwaltungs- und Analyseeinheit (9), die operativ mit den Benutzererkennungsmitteln (4), den Schusswaffenerkennungsmitteln (5) und den Zielerkennungsmitteln (6) verbunden ist, die geeignet sind, die physischen Benutzerzustandsdaten, der Schusswaffenzustandsdaten und der Zieldaten zu empfangen, wobei die Datenverwaltungs- und Analyseeinheit (9) dazu konfiguriert ist, ein virtuelles Trainingsmodell in Abhängigkeit von den eingestellten/gespeicherten Benutzermerkmalen zu erstellen, die beispielsweise aus theoretischen Modellen, die sich aus wissenschaftlichen Studien ergeben, in Abhängigkeit von gespeicherten/eingestellten Umweltmerkmalen, in Abhängigkeit von gespeicherten/eingestellten Trainingssektionenmerkmalen und in Abhängigkeit von den erwarteten Ergebnissen stammen, um die physischen Benutzerzustandsdaten, die Schusswaffenzustandsdaten und die Zieldaten mit dem virtuellen Trainingsmodell zu vergleichen.

2. Trainingssystem (1) nach Anspruch 1, wobei die Datenverwaltungs- und Analyseeinheit (9) einen Speicher (99) umfasst und bei jeder Trainingssektion die physischen Benutzerzustandsdaten, die Schusswaffenzustandsdaten und die Zieldaten in dem Speicher (99) sammelt und die gespeicherten/eingestellten Benutzermerkmale, Umweltmerkmale und Trainingssektionsmerkmale aktualisiert und das virtuelle Trainingsmodell aktualisiert, um neu gesammelte physische Benutzerzustandsdaten, neue Schusswaffenzustandsdaten und neue Zieldaten mit dem aktualisierten virtuellen Trainingsmodell zu vergleichen.

3. Trainingssystem (1) nach Anspruch 2, wobei die Datenverwaltungs- und Analyseeinheit (9) das virtuelle Trainingsmodell zwischen einer Trainingssektion und der anderen und/oder sie das virtuelle Trainingsmodell während einer Trainingssektion in Echtzeit aktualisiert.

4. Trainingssystem (1) nach einem der vorhergehenden Ansprüche, wobei die Datenverwaltungs- und Analyseeinheit (9) eine Trainingssektion in Abhängigkeit von den anfänglichen physischen Benutzerzustandsdaten und/oder in Abhängigkeit von den erwarteten Ergebnissen einstellt.

5. Trainingssystem (1) nach einem der vorhergehenden Ansprüche, wobei die Datenverwaltungs- und Analyseeinheit (9) mit einer externen elektronischen Vorrichtung (10) verbunden ist, beispielsweise einem Computer, einem Tablet, einem Smartphone, wobei die Daten über die externe Vorrichtung (10) in der Datenverwaltungs- und Analyseeinheit (9) zugänglich, änderbar und integrierbar sind, um das virtuelle Trainingsmodell zu ändern.

6. Trainingssystem (1) nach einem der vorhergehenden Ansprüche, wobei die Schusswaffe (3) eine Simulacrum-Schusswaffe ist, wobei das Trainingssystem (1) Vorrichtungen umfasst, die von dem Benutzer (7) tragbar sind, umfassend haptische Vorrichtungen (70), die geeignet sind, haptische Signale auf den Benutzer (70) zu erzeugen, wobei die Vorrichtung, die von dem Benutzer (7) tragbar ist, operativ mit der Datenverwaltungs- und Analyseeinheit (9) verbunden ist, wobei die Datenverwaltungs- und Analyseeinheit (9) die Betätigung der haptischen Vorrichtungen (70) steuert.

7. Trainingssystem (1) nach einem der vorhergehenden Ansprüche, wobei die Benutzererkennungsmittel (4) umfassen:
- eine Herzstatuserkennungsgruppe, die vorzugsweise geeignet ist, den Herzschlag des Benutzers und/oder Elektrokardiogramm zu erkennen; und
- eine Atemstatuserkennungsgruppe, die vorzugsweise geeignet ist, die Atemfrequenz zu erkennen; und
eine Schweißerfassungsgruppe, die vorzugsweise geeignet ist, die galvanische Hautreaktion (GSR) zu erkennen; und
eine Gliedstatuserkennungsgruppe, die vorzugsweise geeignet ist, eine Myographie der Glieder und der Hauptmuskeln der Glieder durchzuführen; und
eine Positionserfassungsgruppe, die vorzugsweise geeignet ist, die Position des Benutzers in dem Trainingsbereich (2) zu erkennen; und
eine Benutzeraktivitätserfassungsgruppe, die vorzugsweise geeignet ist, die Geschwindigkeit und/oder die Beschleunigung und/oder die Winkelgeschwindigkeit des Benutzers in dem Trainingsbereich (2) zu erkennen.

8. Trainingssystem (1) nach Anspruch 7, wobei die Benutzererkennungsmittel (4) an dem Benutzer positioniert sind, beispielsweise von dem Benutzer getragen werden, und/oder in Bezug auf den Benutzer entfernt sind, beispielsweise in dem Trainingsbereich (2) positioniert.

9. Trainingssystem (1) nach einem der vorhergehenden Ansprüche, wobei die Schusswaffenerkennungsmittel (5) umfassen:
- eine Schusswaffenzustandserkennungsgruppe, die vorzugsweise geeignet ist, den Betriebszustand der Schusswaffe, beispielsweise deren Anwesenheit in der Pistolentasche oder deren Zielortung;
- eine Schusswaffenkonfigurationserkennungsgruppe, die vorzugsweise geeignet ist, die Sicherungskonfiguration davon oder die Konfiguration davon in dem halbautomatischen oder automatischen Modus oder der bewaffneten Konfiguration davon zu erkennen; und
eine Schusswaffe-Grifferkennungsgruppe, die vorzugsweise geeignet ist, die Modi zu erkennen, in den die Schusswaffe von dem Benutzer gegriffen wird;
eine Triggerschutzeingriff-Erkennungsgruppe, die vorzugsweise geeignet ist, die Anwesenheit des Fingers des Benutzers in dem Triggerschutz der Schusswaffe zu erkennen;
eine Schuss- und Schussmodus-Erkennungsgruppe, die vorzugsweise geeignet ist, den Schuss der Schusswaffe und/oder der Modi, z. B. der Betätigung des Triggers, der durch den Benutzer durchgeführt wird, zu erkennen;
eine Schusswaffe-Aktivitätserkennungsgruppe, die vorzugsweise geeignet ist, die Geschwindigkeit und/oder Beschleunigung und/oder Winkelgeschwindigkeit der Schusswaffe (3) in dem Trainingsbereich (2) zu erkennen.

10. Trainingssystem (1) nach Anspruch 9, wobei die Schusswaffenerkennungsmittel (5) an der Schusswaffe positioniert sind und/oder in Bezug auf die Schusswaffe entfernt sind, beispielsweise in dem Trainingsbereich (2) positioniert.

11. Trainingssystem (1) nach einem der vorhergehenden Ansprüche, wobei die Zielerkennungsmittel (6) geeignet sind zu erkennen, ob und wie ein Schuss, der mit der Schusswaffe (3) abgegeben wird, das Ziel (20) getroffen hat.

12. Trainingssystem (1) nach Anspruch 11, wobei die Zielerkennungsmittel (6) an dem Benutzer und/oder an der Schusswaffe positioniert sind und/oder die in Bezug auf die Schusswaffe entfernt sind, beispielsweise in dem Trainingsbereich (2) positioniert sind, und/oder auf den Zielen (20) positioniert sind.

13. Trainingssystem (1) nach einem der vorhergehenden Ansprüche, wobei der Trainingsbereich (2) Sensoren zu der Zustandserkennung des Trainingsbereichs (29) umfasst, die geeignet sind, Bereich-Umweltbedingungen, z. B. Temperatur, Feuchtigkeit, Wind und Ähnliches zu erkennen, wobei die Datenverwaltungs- und Analyseeinheit (9) das virtuelle Trainingsmodell in Abhängigkeit von dem, was durch die Sensoren des Zustands des Trainingsbereichs (29) erkennt wird, aktualisiert.

14. Trainingsverfahren zur Verwendung einer Schusswaffe mittels eines Trainingssystems (1) nach einem der vorhergehenden Ansprüche, wobei das Verfahren die folgenden Schritte umfasst:
- Erkennen der physischen Benutzerzustandsdaten, der Schusswaffenzustandsdaten und der Zieldaten;
Erstellen eines virtuellen Trainingsmodells in Abhängigkeit von eingestellten/gespeicherten Benutzermerkmalen, die beispielsweise aus theoretischen Modellen, die sich aus wissenschaftlichen Studien ergeben, in Abhängigkeit von eingestellten/gespeicherten Umweltmerkmalen, in Abhängigkeit von eingestellten/gespeicherten Trainingssektionenmerkmalen und in Abhängigkeit von den erwarteten Ergebnissen stammen;
- Vergleichen der physischen Benutzerzustandsdaten, der Schusswaffenzustandsdaten und der Zieldaten mit dem virtuellen Trainingsmodell.

15. Trainingsverfahren nach Anspruch 14, ferner umfassend die folgenden Schritte:
- Sammeln der physischen Benutzerzustandsdaten, der Schusswaffenzustandsdaten und der Zieldaten;
- Aktualisieren der einstellten/gespeicherten Benutzermerkmale, der eingestellten/gespeicherten Umweltmerkmale, der eingestellten/gespeicherten Trainingssektionsmerkmale;
Aktualisieren des virtuellen Trainingsmodells, um neue gesammelte physische Benutzerzustandsdaten, Schusswaffenzustandsdaten und Zieldaten mit dem aktualisierten virtuellen Trainingsmodell zu vergleichen.

16. Trainingsverfahren nach Anspruch 15, wobei der Schritt des Aktualisierens des virtuellen Trainingsmodells zwischen einer Trainingssektion und der anderen und/oder während einer Trainingssektion in Echtzeit durchgeführt wird.

## Revendications

1. Système d'entraînement (1) pour l'utilisation d'une arme à feu, comprenant :
- une zone d'entraînement (2), dans laquelle des séances d'entraînement sont exécutables, la zone d'entraînement (2) comprenant des cibles (20) fixes ou mobiles ;
- une arme à feu (3) ;
- des moyens de détection de l'utilisateur (4) adaptés pour détecter des données d'état physique de l'utilisateur ;
des moyens de détection de l'arme à feu (5) adaptés pour détecter des données d'état de l'arme à feu ;
- des moyens de détection de la cible (6) adaptés pour détecter des données de la cible;
- une unité de gestion et d'analyse des données (9), connectée de manière opérationnelle aux moyens de détection de l'utilisateur (4), aux moyens de détection de l'arme à feu (5) et aux moyens de détection de la cible (6), adaptée pour recevoir les données d'état physique de l'utilisateur, les données d'état de l'arme à feu et les données de la cible, l'unité de gestion et d'analyse des données (9) étant configurée pour créer un modèle virtuel d'entraînement, en fonction de caractéristiques utilisateur définies/enregistrées, par exemple provenant de modèles théoriques issus d'études scientifiques, en fonction de caractéristiques environnementales définies/enregistrées, en fonction de caractéristiques de séance d'entraînement définies/enregistrées, et en fonction des résultats attendus, afin de comparer les données d'état physique de l'utilisateur, les données d'état de l'arme à feu et les données de la cible avec le modèle virtuel d'entraînement.

2. Système d'entraînement (1) selon la revendication 1, dans lequel l'unité de gestion et d'analyse des données (9) comprend une mémoire (99) et, pour chaque séance d'entraînement, collecte, dans la mémoire (99), les données d'état physique de l'utilisateur, les données d'état de l'arme à feu et les données de la cible, et met à jour les caractéristiques utilisateur définies/enregistrées, les caractéristiques environnementales définies/enregistrées, les caractéristiques de séance d'entraînement définies/enregistrées, et met à jour le modèle virtuel d'entraînement afin de comparer les nouvelles données collectées d'état physique de l'utilisateur, les nouvelles données d'état de l'arme à feu et les nouvelles données de la cible avec le modèle virtuel d'entraînement mis à jour.

3. Système d'entraînement (1) selon la revendication 2, dans lequel l'unité de gestion et d'analyse des données (9) met à jour le modèle virtuel d'entraînement entre une séance d'entraînement et l'autre, et/ou met à jour le modèle virtuel d'entraînement pendant une séance d'entraînement en temps réel.

4. Système d'entraînement (1) selon l'une quelconque des revendications précédentes, dans lequel l'unité de gestion et d'analyse des données (9) définit une séance d'entraînement en fonction des données initiales d'état physique de l'utilisateur et/ou en fonction des résultats attendus.

5. Système d'entraînement (1) selon l'une quelconque des revendications précédentes, dans lequel l'unité de gestion et d'analyse des données (9) est connectée à un dispositif électronique externe (10), par exemple un ordinateur, une tablette, un smartphone, dans lequel, par le biais dudit dispositif externe (10), les données dans l'unité de gestion et d'analyse des données (9) sont accessibles, modifiables et intégrables, pour modifier le modèle virtuel d'entraînement.

6. Système d'entraînement (1) selon l'une quelconque des revendications précédentes, dans lequel l'arme à feu (3) est une arme à feu simulacre, dans lequel le système d'entraînement (1) comprend des dispositifs portables par l'utilisateur (7) comprenant des dispositifs haptiques (70) adaptés pour produire des signaux haptiques sur l'utilisateur (70), dans lequel ledit dispositif portable par l'utilisateur (7) est connecté de manière opérationnelle à l'unité de gestion et d'analyse des données (9), dans lequel l'unité de gestion et d'analyse des données (9) commande l'actionnement des dispositifs haptiques (70).

7. Système d'entraînement (1) selon l'une quelconque des revendications précédentes, dans lequel les moyens de détection de l'utilisateur (4) comprennent :
un groupe de détection de l'état cardiaque, de préférence adapté pour détecter les battements de cœur de l'utilisateur et/ou l'électrocardiogramme ; et
un groupe de détection de l'état respiratoire, de préférence adapté pour détecter la fréquence respiratoire ; et
un groupe de détection de la sueur, de préférence adapté pour détecter la réponse galvanique de la peau (GSR) ; et
un groupe de détection de l'état des membres, de préférence adapté pour effectuer une myographie des membres et des principaux muscles des membres ; et
un groupe de détection de la position, de préférence adapté pour détecter la position de l'utilisateur dans la zone d'entraînement (2) ; et
un groupe de détection de l'activité de l'utilisateur, de préférence adapté pour détecter la vitesse et/ou l'accélération et/ou la vitesse angulaire de l'utilisateur dans la zone d'entraînement (2).

8. Système d'entraînement (1) selon la revendication 7, dans lequel les moyens de détection de l'utilisateur (4) sont positionnés sur l'utilisateur, par exemple portés par l'utilisateur, et/ou sont distants par rapport à l'utilisateur, par exemple positionnés dans la zone d'entraînement (2).

9. Système d'entraînement (1) selon l'une quelconque des revendications précédentes, dans lequel les moyens de détection de l'arme à feu (5) comprennent :
- un groupe de détection de l'état de l'arme à feu, de préférence adapté pour détecter l'état de fonctionnement de l'arme à feu, par exemple, sa présence dans l'étui ou son orientation ;
un groupe de détection de la configuration de l'arme à feu, de préférence adapté pour détecter sa configuration de sécurité, ou
sa configuration en mode semi-automatique ou automatique, ou sa configuration armée ; et
- un groupe de détection de la préhension de l'arme à feu, de préférence adapté pour détecter les modes de prise en main de l'arme à feu par l'utilisateur ;
- un groupe de détection d'engagement du pontet, de préférence adapté pour détecter la présence du doigt de l'utilisateur dans le pontet de l'arme à feu ;
- un groupe de détection du tir et du mode de tir, de préférence adapté pour détecter le tir de l'arme à feu et/ou les modes, par exemple l'actionnement de la détente effectué par l'utilisateur ;
- un groupe de détection de l'activité de l'arme à feu, de préférence adapté pour détecter la vitesse et/ou l'accélération et/ou la vitesse angulaire de l'arme à feu (3) dans la zone d'entraînement (2).

10. Système d'entraînement (1) selon la revendication 9, dans lequel les moyens de détection de l'arme à feu (5) sont positionnés sur l'arme à feu et/ou sont distants par rapport à l'arme à feu, par exemple positionnés dans la zone d'entraînement (2).

11. Système d'entraînement (1) selon l'une quelconque des revendications précédentes, dans lequel les moyens de détection de la cible (6) sont adaptés pour détecter si et comment un tir effectué avec l'arme à feu (3) a atteint la cible (20).

12. Système d'entraînement (1) selon la revendication 11, dans lequel les moyens de détection de la cible (6) sont positionnés sur l'utilisateur et/ou sur l'arme à feu, et/ou sont distants par rapport à l'arme à feu, par exemple positionnés dans la zone d'entraînement (2), et/ou positionnés sur les cibles (20).

13. Système d'entraînement (1) selon l'une quelconque des revendications précédentes, dans lequel la zone d'entraînement (2) comprend des capteurs d'état de la zone d'entraînement (29) adaptés pour détecter les conditions environnementales de la zone, par exemple température, humidité, vent, et similaires, dans lequel l'unité de gestion et d'analyse des données (9) met à jour le modèle virtuel d'entraînement en fonction de ce qui est détecté par les capteurs d'état de la zone d'entraînement (29).

14. Procédé d'entraînement pour l'utilisation d'une arme à feu au moyen du système d'entraînement (1) selon l'une quelconque des revendications précédentes, dans lequel le procédé comprend les étapes de :
- détecter les données d'état physique de l'utilisateur, les données d'état de l'arme à feu et les données de la cible ;
créer un modèle virtuel d'entraînement en fonction de caractéristiques utilisateur définies/enregistrées, par exemple provenant de modèles théoriques issus d'études scientifiques, en fonction de caractéristiques environnementales définies/enregistrées, en fonction de caractéristiques de séance d'entraînement définies/enregistrées et en fonction des résultats attendus ;
- comparer les données d'état physique de l'utilisateur, les données d'état de l'arme à feu et les données de la cible avec le modèle virtuel d'entraînement.

15. Procédé d'entraînement selon la revendication 14, comprenant en outre les étapes de :
- collecter les données d'état physique de l'utilisateur, les données d'état de l'arme à feu et les données de la cible ;
- mettre à jour les caractéristiques utilisateur définies/enregistrées, les caractéristiques environnementales définies/enregistrées, les caractéristiques de séance d'entraînement définies/enregistrées ;
mettre à jour le modèle virtuel d'entraînement pour comparer les nouvelles données d'état physique de l'utilisateur collectées, les données d'état de l'arme à feu et les données de la cible avec le modèle virtuel d'entraînement mis à jour.

16. Procédé d'entraînement selon la revendication 15, dans lequel ladite étape de mise à jour du modèle virtuel d'entraînement est effectuée entre une séance d'entraînement et l'autre, et/ou pendant une séance d'entraînement en temps réel.
